# EUROPÄISCHE PATENTSCHRIFT

(11) **EP 0 846 278 B1**
(45) Veröffentlichungstag und Bekanntmachung des Hinweises auf die Patenterteilung: **29.12.1999**
(21) Anmeldenummer: 96929250.7
(22) Anmeldetag: 13.08.1996
(51) Int. Cl.: G02B 5/122, G01C 15/06

(54) **ANORDNUNG ZUR RETROREFLEXION EINER STRAHLUNG MIT TRIPELPRISMEN**
ARRANGEMENT FOR RETROREFLECTION OF A RAY USING TRIPLE PRISMS
DISPOSITIF DE RETROREFLEXION D'UN RAYONNEMENT AU MOYEN DE PRISMES TRIPLES

(30) Priorität: 22.08.1995 DE 19530809
(43) Veröffentlichungstag der Anmeldung: 10.06.1998
(73) Patentinhaber: Leica Geosystems AG, 9435 Heerbrugg (CH)
(72) Erfinder: HINDERLING, Jürg, CH-9437 Marbach (CH)
(74) Vertreter: Büchel, Kurt F., Dr.
(86) Internationale Anmeldenummer: EP9603577
(87) Internationale Veröffentlichungsnummer: WO9708572

(56) Entgegenhaltungen:
- US-A- 3 039 093
- US-A- 4 416 509
- US-A- 5 117 305
- PATENT ABSTRACTS OF JAPAN vol. 010, no. 106 (P-449), 22.April 1986 & JP,A,60 237402 (KUBOTA TEKKO KK), 26.November 1985

## Beschreibung

Die Erfindung betrifft eine Anordnung zur Retroreflexion einer optischen Strahlung mit Tripelprismen entsprechend den Merkmalen im Oberbegriff des Anspruchs 1.

Im geodätischen Vermessungswesen, in der Bauvermessung und der industriellen Meßtechnik werden selbststrahlende oder reflektierende Zielmarken wie Kugelreflektoren, Reflexfolien oder Tripelprismen verwendet, um Punkte im Raum zu markieren. Die Zielmarken werden mit Theodoliten oder mit einem Tachymeter, also einem Theodoliten mit Entfernungsmesser, anvisiert. Durch Richtungs- und Entfernungsmessungen zu den Zielmarken werden deren dreidimensionale Koordinaten bezüglich eines vorgegebenen Koordinatensystems ermittelt.

Neben der Bestimmung und Aufzeichnung von Koordinaten können auch umgekehrt Koordinaten, die in einem Plan aufgezeichnet sind oder aus einer Karte entnommen werden können, vor Ort abgesteckt werden.

Beispielsweise wird im Straßenbau die Trassenführung mittels Theodoliten oder eines Tachymeters und eines mit einer Zielmarke versehenen Lotstocks abgesteckt. Dabei werden als Bedienpersonal mindestens zwei Personen benötigt, die sich durch Handzeichen oder per Funk verständigen. Zum einen werden die nach Plan vorgegebenen Koordinaten am Vermessungsinstrument eingestellt, während zum anderen der Lotstock mit der Zielmarke so lange bewegt wird, bis die Zielmarke die Sollkoordinaten erreicht hat. Dabei muß das Bedienpersonal stets auf die Ausrichtung der Zielmarke zum Vermessungsinstrument achten.

Bei Vermessungsvorgängen mit wechselnden Instrumentenaufstellungen wird oftmals auf dieselben Fixpunkte eingemessen. Die bei den Fixpunkten aufgestellten Zielmarken werden dabei aus unterschiedlichen Richtungen anvisiert. Die Zielmarken müssen durch Drehen wiederum auf das jeweilige Vermessungsinstrument ausgerichtet werden.

Weiterhin kann bei bestimmten Vermessungsvorgängen im Bau- oder Vermessungswesen eine Zielmarke als Referenzzielmarke für mehrere Vermessungsinstrumente zugleich dienen. Auch dabei muß die Zielmarke sukzessive auf jedes einzelne Vermessungsinstrument ausgerichtet werden.

Mit dem Aufkommen von automatisierten Vermessungsinstrumenten ergibt sich für den Träger des Lotstocks eine weitere Schwierigkeit. Bei modemen Vermessungsinstrumenten wird die visuelle Beobachtung der Zielmarke über das Theodolitfernrohr durch eine elektronische Aufnahme der Zielmarke zusätzlich unterstützt oder sogar ersetzt. Die Aufnahmen erfolgen durch Videokameras oder mit CCD-Arrays, die in der Abbildungsoptik des Theodoliten integriert sind. Solche Systeme sind in der Zeitschrift "OPTICUS", Nr. 1/94, S. 8-9, der Fa. LEICA AG, "Theodolite - Sensoren für die industrielle Vermessung" oder in der DE 3424806 C2 beschrieben. Mit Hilfe der Bildverarbeitung ist es möglich, die Zielmarken automatisch zu erfassen und ihre Koordinaten zu bestimmen. Dadurch kann ein motorisierter Theodolit so gesteuert werden, daß er eine sich bewegende Zielmarke automatisch verfolgen kann. Dies bedeutet, daß sich der Träger des Lotstocks im Gelände zwar frei bewegen kann, ohne daß der Theodolit die Zielmarke aus dem Blickfeld verliert. Allerdings muß gleichzeitig die Zielmarke ständig auf den Theodoliten ausgerichtet sein, was die Aufmerksamkeit des Lotstockträgers vom Gelände und den Meßpunkten ablenkt. Deswegen ergibt sich auch für diesen Anwendungszweck der automatisierten Zielmarkenverfolgung der Bedarf nach einer Zielmarke mit einem größeren retroreflektierenden Winkelbereich.

Die in der industriellen Meßtechnik häufig eingesetzten Kugelreflektoren, verchromte Stahlkugeln, wären ideal. Sie können von allen Richtungen beleuchtet werden und liefem jeweils dasselbe Zielmarkenbild. Jedoch können mit ihnen nur sehr kurze Enffemungen vermessen werden, da die von ihnen reflektierte Intensität mit der 4. Potenz des Abstandes abnimmt. Im geodätischen Vermessungswesen oder in der Bauvermessung werden deshalb meistens Reflexfolien oder Tripelprismen verwendet, die einen hohen Reflexionsgrad besitzen. Allerdings ist bei ihnen die rückreflektierte Intensität winkelabhängig und der nutzbare Winkelbereich ist auf etwa ± 45° beschränkt.

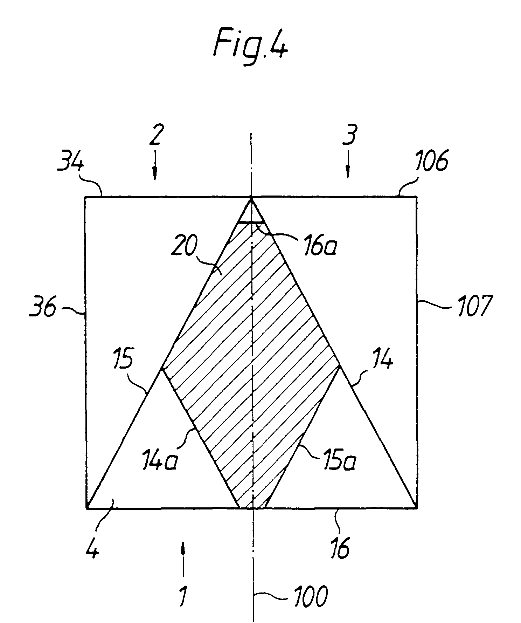

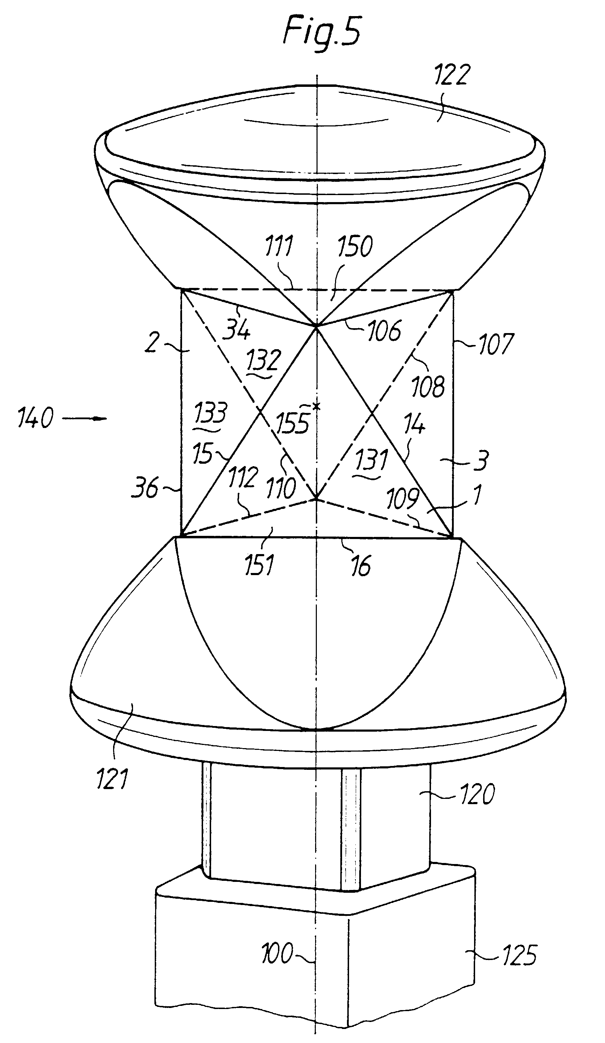

In der US-A-4 416 509 werden Reflektoren mit Tripelprismen zur Messung von Strömungsverläufen und -geschwindigkeiten in Gewässern beschrieben, wobei ein Reflektor aus zwei Prismenkränzen zu je sechs zylindrisch angeordneten Prismen besteht. Die Seitenflächen benachbarter Prismen sowohl innerhalb des oberen als auch innerhalb des unteren Prismenkranzes berühren sich nicht, sondern lediglich die Eckpunkte (Fig. 4, Fig. 5). Auch die Seitenflächen der gegeneinander verkippten Prismenkränze liegen trotz der scheinbar engen Verzahnung nicht aneinander an, wie die Prismen mit den Prismenspitzen C' und C" in Fig. 5 zeigen. Insgesamt führt die Anordnung zu Prismenkränzen mit einem relativ großen Durchmesser, was sich auf die Genauigkeit bei der Seitenwinkel- und Distanzmessung nachteilig auswirkt. Da zusätzlich die Prismenspitzen C', C" einen großen Abstand aufweisen, ist die Genauigkeit bei der Höhenwinkelmessung reduziert.

Aus der US 5 301 435 ist eine Prismenanordnung bekannt, bei der mehrere retroreflektierende Prismen, die eine gebräuchliche runde Lichteintrittsfläche besitzen, auf einer Zylinderoberfläche angeordnet sind. Die einzelnen Prismen sind räumlich separiert. Je 3 Prismen liegen in zwei übereinander liegenden Ebenen. Die Prismen einer Ebene sind um 120° zueinander versetzt und um 60° gegenüber denjenigen der Nachbarebene. Dadurch deckt jedes Prisma einen Winkelbereich ab und die gesamte Prismenanordnung reflektiert Licht aus allen horizontalen Richtungen über 360°. Mit dieser Prismenanordnung werden Distanzen gemessen. Dabei können aber nur Distanzen oberhalb einer bestimmten Mindest-Distanz von etwa 1000 m gemessen werden.

Die Aufgabe der Erfindung ist es, einen Retroreflektor für eine optische Strahlung anzugeben, mit dem eine Retroreflexion mit hoher Intensität für einen großen Winkelbereich, der bis zu 360° rundherum für alle Richtungen betragen kann, möglich ist und mit dem sowohl eine Winkel- als auch eine Distanzvermessung mit einer hohen geodätischen Meßgenauigkeit - auch bei sehr kurzen Distanzen - zuverlässig erreicht werden kann.

Die Aufgabe wird dadurch gelöst, daß 6 bis 10 Tripelprismen vorgesehen und so angeordnet sind, daß die Seitenflächen jeweils benachbarter Tripelprismen direkt aneinanderliegen und die Tripelprismaspitzen räumlich möglichst nahe beieinanderliegen, wobei die Berührungslinien der Pupillen benachbarter Tripelprismen windschief zu einer vertikalen, durch das Zentrum der Anordnung führenden Achse verlaufen.

Vorteilhafte Ausgestaltungen und Weiterbildungen der Erfindung ergeben sich aus den Unteransprüchen 2-5.

Die retroreflektierende Wirkung eines Tripelprismas leitet sich von der eines Tripelspiegels ab, bei dem drei Spiegelflächen in jeweils senkrechtem Winkel aneinanderstoßen. Fällt Licht in einen solchen Tripelspiegel, werden die Lichtstrahlen an allen drei Spiegelflächen reflektiert, wobei die aus dem Tripelspiegel austretenden Lichtstrahlen parallel und seitlich versetzt zu den einfallenden Lichtstrahlen verlaufen. Diese Retroreflexion ist innerhalb eines bestimmten Einfallswinkelbereichs möglich.

Ein Tripelprisma, das auch als Tripelspiegelprisma bezeichnet wird, kann z.B. aus einem Glaswürfel durch Herausschneiden einer Würfelecke hergestellt werden. Die Schnittfläche bildet die Eintrittsfläche des Lichts. Die drei aufeinander senkrecht stehenden Seitenwände der Würfelecke sind im allgemeinen verspiegelt. Gegebenenfalls kann auch bei nicht verspiegelten Seitenwänden die Totalreflexion ausgenutzt werden. Insgesamt wird eine Retroreflexion des einfallenden Lichtes erzielt, bei der also einfallendes und austretendes Licht bis auf das Vorzeichen dieselbe Richtung besitzen.

Die Würfelecke selbst wird als Prismaspitze des Tripelprismas bezeichnet. Die Raumdiagonale durch die Prismaspitze liegt im allgemeinen windschief zur Schnittfläche des Prismas. Stehen Raumdiagonale und Schnittfläche senkrecht aufeinander, so entsteht ein drehsymmetrisches Tripelprisma. Die Lichteintrittsfläche bildet als Schnittfläche einer Würfelecke zwar geometrisch ein Dreieck, aber aus optischen oder herstellungstechnischen Gründen sind die Ecken der Lichteintrittsfläche sehr stark abgerundet. In den überwiegenden Fällen wird eine vollständig runde Lichteintrittsfläche gefertigt.

Nicht alles Licht, das durch die Lichteintrittsfläche fällt, wird auch retroreflektiert. Nur das in die Pupille des Tripelprismas fallende Licht kann zurückreflektiert werden. Die Pupille wird durch die Seitenkanten der Lichteintrittsfläche und durch diejenigen (geraden und gekrümmten) Linien aufgespannt, die durch Punktspiegelung der Seitenkanten der Lichteintrittsfläche an der virtuellen Prismaspitze entstehen. Die virtuelle Prismaspitze ist die beim Blick in das Tripelprisma sichtbare, aber aufgrund der Brechung des Prismenglases nur scheinbare Prismaspitze.

Die größte Pupillenfläche und somit die größte retroreflektierte Lichtmenge ergibt sich beispielsweise für ein drehsymmetrisches Tripelprisma bei einem Lichteinfall senkrecht zur Lichteintrittsfläche des Tripelprismas.

Bei veränderten Einfallswinkeln des Lichts in das Tripelprisma verändern sich Form und Größe der Pupille. Mit zunehmendem Einfallswinkel wird die Pupillenfläche kleiner und liegt mehr an den Rändern der Lichteintrittsfläche. Schließlich werden bei einem bestimmten Einfallswinkel die Flächen zu Null, und es wird kein Licht mehr retroreflektiert.

Erfindungsgemäß werden mehrere Tripelprismen mit dreieckförmigen Lichteintrittsflächen so angeordnet, daß sich die Seitenflächen benachbarter Tripelprismen berühren. Dabei können die Tripelprismen verschiedene Größen und unterschiedliche Winkel ihrer Lichteintrittsflächen zur Raumdiagonale durch die Tripelprismaspitze besitzen. Dies ist bei Retroreflexionen für bestimmte, vorgegebene Winkelbereiche nützlich.

Die Wirkung derartiger Tripelprismen in ihrer erfindungsgemäßen Anordnung beruht darauf, daß beim Übergang der Retroreflexion von einem Tripelprisma zum benachbarten Tripelprisma sich deren Pupillen längs einer längeren Strecke berühren. Während sich mit verändemdem Einfallswinkel die Pupillenfläche des einen Tripelprismas verkleinert, vergrößert sich die Pupillenfläche des benachbarten Tripelprismas, wobei die Summe der Pupillenflächen stets groß bleibt. Dadurch wird kontinuierlich mit dem Einfallswinkel des Lichts in die Tripelprismenanordnung eine große Lichtmenge retroreflektiert.

Zudem liegen die reflektierten Lichtbündel aufgrund der Berührung der Pupillenflächen benachbarter Tripelprismen längs eines größeren Bereichs räumlich eng beieinander. Dies ist für eine hohe Meßgenauigkeit bei der dreidimensionalen Koordinatenbestimmung der Tripelprismenanordnung und für eine automatisierte Messung wichtig. Dies bedeutet aber auch, daß nur eine geringe Anzahl von Tripelprismen verwendet werden sollte.

Insbesondere können acht Tripelprismen zu einem Oktaeder angeordnet werden, so daß sich jeweils benachbarte Prismenseitenflächen berühren und sich die Prismaspitzen im Oktaedermittelpunkt treffen. So wird eine vollständige Rundum-Retroreflexion erreicht. Das Licht wird bei jedem beliebigen horizontalen und vertikalen Einfallswinkel mit großer Intensität rückreflektiert.

Mit einer solchen, für alle Raumrichtungen retroreflektierenden Prismenanordnung als Zielmarke bedarf es keiner Ausrichtung mehr zu einem Vermessungsinstrument. Diese Zielmarke kann also im Gelände beliebig bewegt werden, ohne daß die Trägerperson je auf ihre Ausrichtung achten muß. Dies ist ein entscheidender Vorteil bei der automatischen Vermessung.

Aus Befestigungsgründen können zwei gegenüberliegende Oktaederplätze der Prismenanordnung von Tripelprismen unbesetzt bleiben. An diesen Stellen kann die Prismenanordnung beispielsweise an einem Lotstock oder Stativ befestigt werden. Dabei bleibt die Rundum-Reflexion für horizontale Richtungen bestehen, während für die vertikalen Richtungen der für die vorhandenen Tripelprismen geltende Winkelbereich nutzbar ist. Gegebenenfalls können auch mehrere Prismenanordnungen dieser Art in bestimmten Abständen an einem Lotstock befestigt werden.

Die Koordinatenbestimmung der erfindungsgemäßen Prismenanordnung erfolgt aus dem Schwerpunkt der von ihr kommenden Lichtreflexe. Je nach Einfallswinkel können bis zu drei Tripelprismen gleichzeitig das Licht mit jeweils unterschiedlichen Intensitäten reflektieren. Wie sich herausgestellt hat, variiert der Ort des Schwerpunkts der Lichtreflexe mit dem Einfallswinkel des Lichts nur in sehr engen Grenzen. Die Meßgenauigkeit der dreidimensionalen Koordinaten der Prismenanordnung ist für jede Koordinate stets besser als 5 mm. Dies gilt für jeden Einfallswinkel und für den Distanzbereich von 0 m bis über 1.000 m. Die meisten Meßanforderungen werden damit erfüllt. Wird eine besonders hohe Meßgenauigkeit verlangt, so kann eines der Tripelprismen der Anordnung in herkömmlicher Weise exakt auf das Vermessungsinstrument ausgerichtet und so eine hohe Punktgenauigkeit von etwa 1 mm erreicht werden.

Für die Entfernungsmessung sind Enffernungsmesser gebräuchlich, bei denen die Strahlenbündel von Lichtsender und Lichtempfänger räumlich getrennt nebeneinander liegen. Zwischen dem Entfernungsmesser und herkömmlichen Reflektoren treten Mehrfach-Reflexionen auf, die das Meßergebnis verfälschen. Aufgrund der zur Anordnung von Lichtsender und Lichtempfänger des Entfernungsmessers schräg liegenden Pupillen der Prismenanordnung und der niedrigen Prismenzahl ist der Effekt von Mehrfach-Reflexionen weitgehend reduziert.

Bei herkömmlichen Zielmarkenanordnungen (US 5 301 435) treten zudem Reflexionen an den räumlich getrennten Tripelprismen zugleich auf, was ebenfalls zu einer fehlerhaften Distanzmessung führt. Dies macht sich hauptsächlich im kurzen Entfernungsbereich bemerkbar, weshalb bei solchen Zielmarkenanordnungen eine Mindestdistanz eingehalten werden muß. Im Gegensatz dazu ist mit der erfindungsgemäßen Prismenanordnung mit sehr eng beieinanderliegenden Reflexen eine zuverlässige Entfernungsmessung auch auf kurze Distanzen möglich.

Im folgenden werden Ausführungsbeispiele anhand der Zeichnung näher erläutert. Es zeigt
- Fig.1a: eine schematische Darstellung eines Tripelprismas,
- Fig.1b: eine schematische Darstellung der Lichteintrittsflächen und virtuellen Prismaspitzen zweier benachbarter Tripelprismen,
- Fig. 2: eine schematische Darstellung der Pupillen der Tripelprismenanordnung gemäß Fig. 1b bei voller Beleuchtung zur Bestimmung der Winkelkoordinaten,
- Fig. 3: eine schematische Darstellung der Pupillen der Tripelprismenanordnung gemäß Fig. 1b mit retroreflektierenden Nutzflächen bei halbseitiger Beleuchtung für die Entfernungsmessung,
- Fig. 4: eine schematische Darstellung dreier benachbarter Tripelprismen und der Pupille des mittleren Prismas, gegenüber Fig. 1-3 um 30° um die Lotstockachse gedreht,
- Fig. 5: eine räumliche Darstellung eines Rundum-Reflektors mit sechs Tripelprismen, Halterungen und Lotstock,

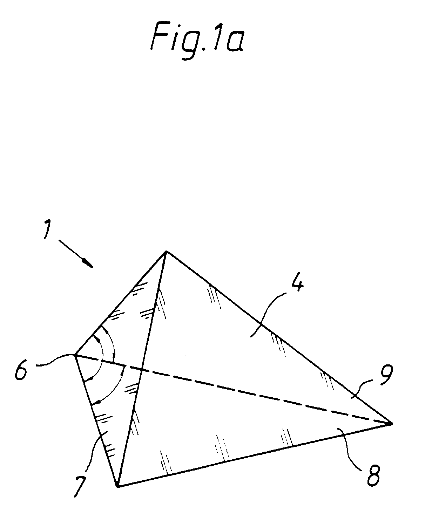

Fig. 1a zeigt ein Tripelprisma 1 aus Glas. In der Tripelprismaspitze 6 treffen sich verspiegelte Seitenflächen 7, 8, 9 im rechten Winkel. Die Lichteintrittsfläche 4 ist dreieckförmig ausgebildet.

Im allgemeinen können unterschiedlich große Tripelprismen 1 mit dreieckförmigen Lichteintrittsflächen 4 mit unterschiedlich langen Dreieckskanten hergestellt und für die erfindungsgemäße Anordnung verwendet werden. Dabei sind ihre Lichteintrittsflächen 4 gegeneinander verkippt. Der leichteren Darstellung der Erfindung wegen werden in den folgenden Figuren gleich große, drehsymmetrische Tripelprismen 1, bei denen die Lichteintrittsfläche 4 ein gleichseitiges Dreieck bildet, gezeigt.

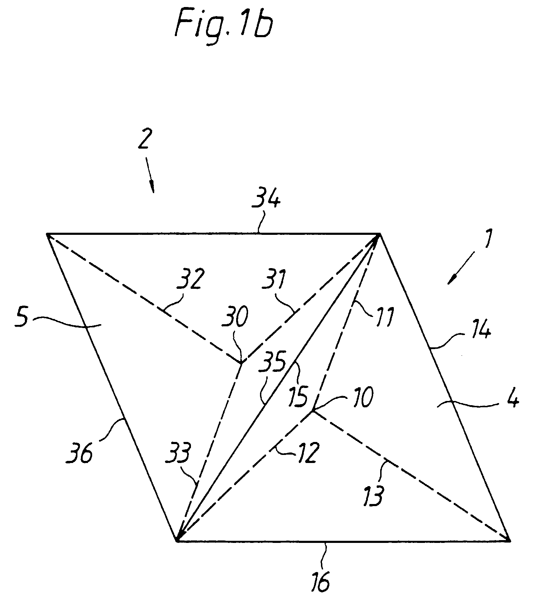

Zwei solche Tripelprismen 1 und 2 sind in Fig.1b schematisch dargestellt. Die Lichteintrittsfläche 4 des Tripelpnsmas 1 wird von den Dreieckseiten 14, 15, 16 und die Lichteintrittsfläche 5 des Tripelprismas 2 von den Dreieckseiten 34. 35, 36 begrenzt. Die Lichteintrittsflächen 4 und 5 befinden sich in der Darstellung der Fig.1b nicht in der Zeichenebene, sondern verlaufen von den in der Zeichenebene liegenden Dreieckseiten 15 bzw. 35 ausgehend räumlich nach hinten. Die Dreiecksspitzen, die durch die Seiten 14 und 16 bzw. 34 und 36 gebildet werden, liegen also im Hintergrund.

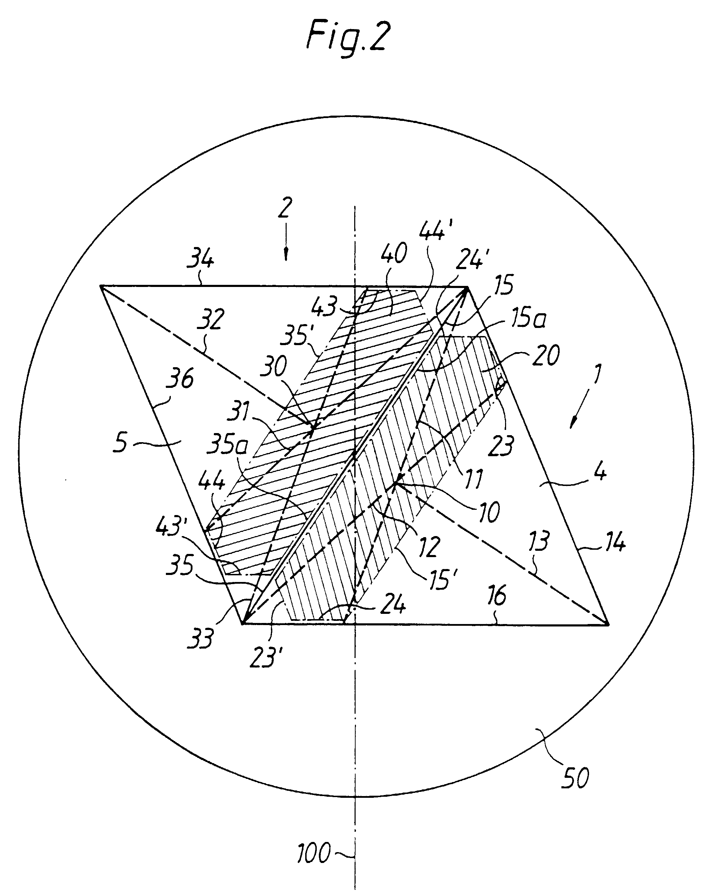

Zudem sollen die benachbarten Seitenflächen der Tripelprismen 1 und 2 direkt aneinandergrenzen und die mit den Lichteintrittsflächen 4 und 5 gebildeten Kanten 15 und 35 zusammenfallen. Dabei stehen die benachbarten Seitenflächen hinter den Kanten 15 und 35 senkrecht zur Zeichenebene und dürften beim Einblick in die Tripelprismen 1 und 2 eigentlich nicht sichtbar sein. Aufgrund des Brechungsindexes der im allgemeinen aus Glas bestehenden Tripelprismen 1 und 2 sind sie jedoch sichtbar und spannen die Dreiecke mit den Seiten 11, 12, 15 und 31, 33, 35 auf. Ebenso sind die virtuellen Prismaspitzen 10 und 30 der Tripelprismen 1 und 2 sichtbar, obwohl ihre realen Prismaspitzen zusammenfallen. Die Existenz der virtuellen Prismaspitzen 10 und 30 ist für die Erfindung entscheidend, da dadurch die unter Fig. 2 erläuterten Pupillenflächen der Tripelprismen 1 und 2 von Null verschieden sind und deshalb senkrecht zur Papierebene einfallendes Licht retroreflektieren können. Mit zwei Tripelspiegeln, bei denen keine brechende Wirkung vorhanden ist, wäre in derselben Anordnung und bei denselben Lichteinfallsbedingungen eine Retroreflexion also nicht möglich.

Zu den benachbarten Seitenflächen der Tripelprismen 1 und 2 stehen die anderen Seitenflächen jeweils senkrecht. Diese werden durch die Flächen mit den Begrenzungen 12, 13, 16 und 11, 13, 14 bzw. 31, 32, 34 und 32, 33, 36 dargestellt.

Die Anordnung der Tripelprismen gemäß Fig. 1b wird mit Licht im optischen Wellenlängenbereich senkrecht zur Zeichenebene beleuchtet. Dies ist in Fig. 2 durch die Beleuchtungskreisfläche 50 dargestellt. Die Beleuchtungskreisfläche 50 überdeckt die Lichteintrittsflächen 4 und 5 der Tripelprismen 1 und 2. Aber nur das in die schraffiert dargestellten Pupillenflächen 20 und 40 der Tripelprismen 1 und 2 einfallende Licht wird auch retroreflektiert. Dabei wird die Pupillenfläche 20 von einem Teilstück 15a der Prismenkante 15 und von den Teilstücken 23 und 24 der Prismenkanten 14 und 16 und von den Begrenzungslinien 15', 23' und 24' aufgespannt. Die Begrenzungslinien 15', 23' und 24' entstehen durch Punktspiegelung der entsprechenden Teile der Prismenkanten 15, 14, 16 an der virtuellen Prismaspitze 10. Analog dazu wird die Pupillenfläche 40 des Tripelprismas 2 durch Kantenteile 35a, 43, 44 und deren an der virtuellen Prismaspitze 30 punktgespiegelten Linien 35', 43', 44' aufgespannt. Das retroreflektierte Licht ist gegenüber dem einfallenden Licht ebenfalls an den virtuellen Prismapitzen 10 bzw. 30 punktgespiegelt.

Eine vertikale Achse 100 führt durch die realen, hier nicht eingezeichneten Prismaspitzen der Tripelprismen 1 und 2. Zur Achse 100 verläuft die Berührungslinie 15a, 35a der Pupillen 20, 40 windschief. Die Lichtreflexe werden mit einem Vermessungsinstrument aufgenommen und daraus, z.B. durch Schwerpunktbestimmung, die Winkelkoordinaten, also horizontaler und vertikaler Winkel, des Vermessungsinstruments zur erfindungsgemäßen Prismenanordnung bestimmt.

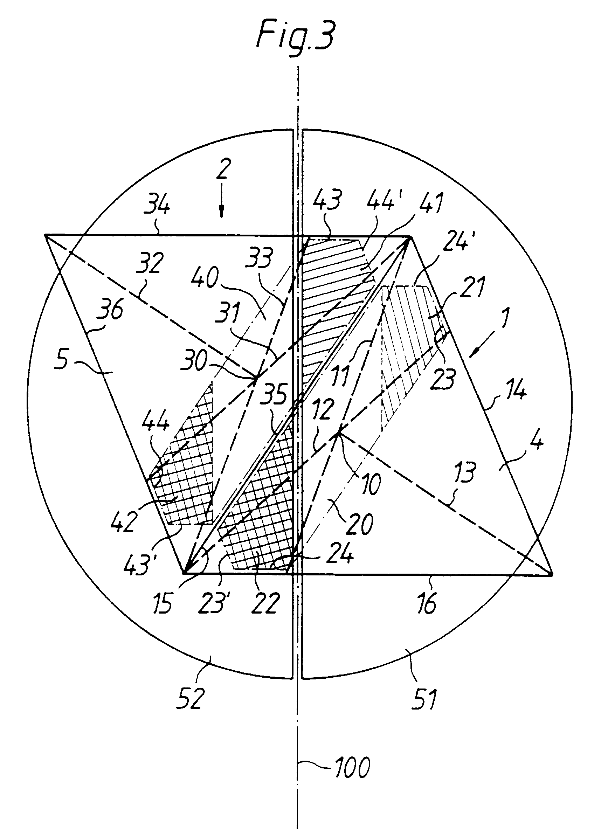

Um die dreidimensionalen Koordinaten der Prismenanordnung zu ermitteln, wird zum Beispiel nach der bekannten Polarmethode zusätzlich zu den Winkelkoordinaten die Entfernung der Prismenanordnung zum Vermessungsinstrument bestimmt. Dazu wird ein herkömmlicher optischer Entfernungsmesser verwendet. Bei diesem sind die Strahlenbündel von Sender und Empfänger im Bündelquerschnitt halbkreisförmig ausgebildet und separat nebeneinander angeordnet. Deshalb trifft das meist im infraroten Wellenlängenbereich liegende Licht des Senders halbkreisförmig auf die Tripelprismen 1 und 2. In Fig. 3 ist die halbkreisförmige Beleuchtungsfläche 51 und ihre Lage bezüglich der Achse 100 dargestellt. Die benachbarte halbkreisförmige Fläche 52 hingegen gibt den Empfangsbereich des Entfernungsmessers an. Aufgrund der separierten Sende- und Empfangsbereiche und aufgrund der Punktspiegelung des einfallenden Lichts an den virtuellen Prismaspitzen 10 bzw. 30, wird nur das durch die einfach schraffierte Nutzfläche 21 bzw. 41 einfallende und durch die doppelt schraffierte Fläche 22 bzw. 42 austretende Licht vom Empfänger des Entfernungsmessers detektiert.

Durch die erfindungsgemäße Tripelprismenanordnung bezüglich dieser Beleuchtungs- und Empfangsgeometrie des Entfernungsmessers ist die Intensität möglicher Mehrfach-Reflexionen zwischen Entfernungsmesser und Tripelprismenanordnung gegenüber der Intensität des Nutzsignals drastisch reduziert und spielt keine Rolle mehr. Somit sind Fehlmessungen bei der Distanzbestimmung ausgeschlossen. Auch für kleine Entfernungen ist der Einfluß von Mehrfach-Reflexionen vernachlässigbar. Zudem unterscheiden sich die Lichtwegstrecken der von den Tripelprismen 1 und 2 reflektierten Strahlen nur geringfügig, was ebenfalls zu einer zuverlässigen und präzisen Distanzbestimmung für kurze Entfernungsbereiche beiträgt.

Werden die Tripelprismen 1 und 2 der Fig. 3 um 30° um die Achse 100 gedreht, so ergibt sich eine Ansicht gemäß Fig. 4. In dieser Darstellung verlaufen die Kanten 14 und 15 des Tripelprismas 1 von ihrem Schnittpunkt aus räumlich in den Hintergrund. Die Kanten 34 und 36 des Tripelpnsmas 2 und die Kanten 106 und 107 eines weiteren Tripelprismas 3 liegen mit ihren Schnittpunkten ebenfalls räumlich im Hintergrund. Die schraffiert dargestellte Pupillenfläche 20 des Tripelprismas 1 wird von Teilen der Prismenkanten 14, 15, 16 und deren Punktspiegelungen 14a, 15a, 16a begrenzt. Dabei ist die volle Pupillenfläche 20 nutzbar retroreflektierend. Das in die rechte schraffierte Flächenhälfte eintretende Licht tritt durch die linke schraffierte Flächenhälfte wieder aus und umgekehrt. Bei einer solchen Ausrichtung der Lichteintrittsfläche 4 des Tripelprismas 1 gemäß Fig. 4 wird die höchste Meßgenauigkeit für alle drei Raumkoordinaten erreicht. Die Tripelprismen 2 und 3 liefern hier kein retroreflektiertes Licht.

Durch Drehen der Prismenanordnung um die Achse 100 gehen die in Fig. 3 und Fig. 4 gezeigten Darstellungen kontinuierlich ineinander über. Die nutzbaren retroreflektierenden Flächen 20, 40 bzw. 21, 41 ändern sich in Form und Größe. Entscheidend ist, daß sich dabei stets die benachbarten Pupillenflächen 20, 40 berühren und stets eine große nutzbare retroreflektierende Fläche bilden. Da diese unter bestimmten Winkeln bis in die Dreiecksecken der Lichteintrittsflächen 4, 5 gehen, ist es wichtig, daß die Ecken der Lichteintrittsflächen 4, 5 möglichst vollständig vorhanden sind.

Werden drei weitere Tripelprismen 131,132,133 an die Rückseite der in Fig.4 dargestellten Prismenanordnung angefügt, so sind alle Seiten rundum lückenlos mit Tripelprismen ausgefüllt. Alle Tripelprismen nehmen Oktaederplätze ein, und alle realen Prismaspitzen berühren sich im Oktaedermittelpunkt 155 (Fig.5). Prinzipiell können die in der Achse 100 gegenüberliegenden Oktaederplätze 150, 151 ebenfalls mit Tripelprismen versehen sein. An diesen Oktaederplätzen können aber auch Fassungen 121, 122 angebracht sein.

Eine räumliche Darstellung dieser als Rundum-Reflektor 140 dienenden Pnsmenanordnung mit sechs Tripelprismen 1, 2, 3, 131, 132, 133 wird in Fig. 5 gezeigt. Die Lichteintrittsflächen der sechs Tripelprismen 1, 2, 3, 131, 132, 133 bilden je ein gleichseitiges Dreieck. Die Dreiecksseiten der im Vordergrund befindlichen und mit durchgezogenen Linien markierten Tripelprismen 1, 2 und 3 wurden bereits benannt. Die Lichteintrittsflächen der drei im Hintergrund befindlichen, gestrichelt markierten Tripelprismen 131, 132, 133 werden durch folgende Dreiecksseiten bestimmt: 107, 108, 109, bzw. 108, 110, 111, bzw. 110, 112, 36.

Die Prismenanordnung wird durch die Fassungen 121 und 122 geschützt bzw. getragen. An der Fassung 121 ist ein Adapter 120 angebracht. An den Adapter 120 können Haltevorrichtungen 125 angekoppelt werden. Solche Haltevorrichtungen 125 können beispielsweise ein Stativ oder ein Lotstock sein. Im Normalfall wird dabei die Lotstockachse mit der Achse 100 der Tripelprismenanordnung übereinstimmen. Die Achse 100 geht durch den Oktaedermittelpunkt 155. Bei Drehung des Lotstocks um die Lotstockachse wird das von einem Vermessungsinstrument auf den Rundum-Reflektor 140 gerichtete Licht über den gesamten Drehbereich mit großer Intensität reflektiert. Dabei wird eine hohe Meßgenauigkeit der 3-dimensionalen Koordinaten des Rundum-Reflektors 140 für jeden Drehwinkel erreicht. Für besonders genaue Koordinatenmessungen kann eines der Tripelprismen 1, 2, 3, 131, 132, 133 des Rundum-Reflektors 140 exakt auf das Vermessungsinstrument ausgerichtet werden (gemäß Fig.4).

Bei Bedarf kann an die Fassung 122 ebenfalls ein Adapter 120 angebracht werden. an dem weitere Baugruppen für die Vermessung angeschlossen werden können.

Der Rundum-Reflektor 140 kann in der Bauvermessung oder in der geodätischen Vermessung von mehreren Vermessungsinstrumenten gleichzeitig angezielt werden. Eine Ausrichtung des Rundum-Reflektors 140 kann entfallen. Er läßt sich somit vorteilhaft als Referenz-Zielmarke verwenden. Dabei werden, wie bereits erörtert, zuverlässige Distanzmessungen auch bei kurzen Distanzen erreicht.

Besondere Vorteile bringt der Rundum-Reflektor 140 auch bei der automatischen Vermessung. Es genügt bereits eine Person zur Bedienung von Vermessungsinstrument und Rundum-Reflektor 140. Das einmal auf den Rundum-Reflektor 140 eingestellte Vermessungsinstrument folgt automatisch dem Rundum-Reflektor 140 in jede Position, unabhängig von etwaigen Drehungen oder Verkippungen des Rundum-Reflektors 140. Auf dessen Ausrichtung zum Vermessungsinstrument braucht nicht mehr geachtet werden. Der Träger des Lotstocks mit einem Rundum-Reflektor 140 kann deshalb seine volle Aufmerksamkeit dem zu vermessenden Gelände widmen.

## Patentansprüche

1. Anordnung zur Retroreflexion einer optischen Strahlung mit Tripelprismen (1,2), wobei die Lichteintrittsfläche (4,5) eines jeden Tripelprismas (1,2) dreieckförmig ausgebildet ist und die Lichteintrittsflächen (4,5) benachbarter Tripelprismen (1,2) gegeneinander verkippt sind, **dadurch gekennzeichnet,** daß 6 bis 10 Tripelprismen (1,2) vorgesehen und so angeordnet sind, daß die Seitenflächen (7,8,9) jeweils benachbarter Tripelprismen (1,2) direkt aneinanderliegen und die Tripelprismaspitzen (6) räumlich möglichst nahe beieinanderliegen, wobei die Berührungslinien (15a;35a) der Pupillen (20;40) benachbarter Tripelprismen (1,2) windschief zu einer vertikalen, durch das Zentrum der Anordnung führenden Achse (100) verlaufen.

2. Anordnung nach Anspruch 1, **dadurch gekennzeichnet,** daß gleich große Tripelprismen (1,2) vorgesehen sind.

3. Anordnung nach einem der vorherigen Ansprüche, **dadurch gekennzeichnet,** daß drehsymmetrische Tripelprismen (1,2) vorgesehen sind, bei denen die Lichteintrittsfläche (4,5) ein gleichseitiges Dreieck bildet.

4. Anordnung nach einem der vorherigen Ansprüche, **dadurch gekennzeichnet,** daß sechs Tripelprismen (1,2,3,131,132,133) zu einem Rundum-Reflektor (140) zusammengesetzt sind, bei dem die jeweils aufeinanderfolgenden Tripelprismen (1,2,3,131,132,133) um 180° gegeneinander gedreht und derart einander angepaßt sind, daß sich ihre Tripelprismaspitzen (6) in einem gemeinsamen Punkt (155) treffen.

5. Anordnung nach Anspruch 4, **dadurch gekennzeichnet,** daß für den Rundum-Reflektor (140) eine Fassung (121) mit einem Adapter (120) vorgesehen ist und daß an dem Adapter (120) eine Haltevorrichtung (125) ankoppelbar ist.

## Claims

1. Arrangement for retroreflection of an optical ray using triple prisms (1, 2), the light entry surface (4, 5) of each triple prism (1, 2) being triangular and the light entry surfaces (4, 5) of adjacent triple prisms (1, 2) being tilted towards one another, characterized in that 6 to 10 triple prisms (1, 2) are provided and are arranged so that the lateral surfaces (7, 8, 9) of adjacent triple prisms (1, 2) in each case directly abut one another and the triple prism apices (6) are spatially as close as possible to one another, the contact lines (15a; 35a) of the aperture diaphragms (20; 40) of adjacent triple prisms (1, 2) being skew to a vertical axis (100) passing through the centre of the arrangement.

2. Arrangement according to Claim 1, characterized in that triple prisms (1, 2) of identical size are provided.

3. Arrangement according to any of the preceding Claims, characterized in that rotationally symmetrical triple prisms (1, 2) in which the light entry surface (4, 5) forms an equilateral triangle are provided.

4. Arrangement according to any of the preceding Claims, characterized in that six triple prisms (1, 2, 3, 131, 132, 133) are combined to form an all-round reflector (140) in which the triple prisms (1, 2, 3, 131, 132, 133) following one another in each case are rotated by 180° relative to one another and are adapted to one another so that their triple prism apices (6) meet at a common point (155).

5. Arrangement according to Claim 4, characterized in that a holder (121) with an adapter (120) is provided for the all-round reflector (140) and that a retaining device (125) can be coupled to the adapter (120).

## Revendications

1. Dispositif de rétroréflexion d'un rayonnement optique au moyen de prismes triples (1,2) la surface d'entrée de lumière (4,5) de chaque prisme triple (1,2) étant de forme triangulaire et les surfaces d'entrée de lumière (4,5) des prismes triples (1,2) voisins étant inclinées les unes par rapport aux autres, caractérisé en ce que 6 à 10 prismes triples (1, 2) sont prévus et disposés de manière que les faces latérales (7, 8, 9) de chacun des prismes triples (1, 2) voisins soient directement placées les unes contre les autres et que les pointes (6) de prismes partiels soient placées spatialement aussi près les unes des autres, les lignes de contact (15a; 35a) des pupilles (20; 40) de prismes triples (1, 2) voisins s'étendant inclinées de travers par rapport à un axe (100) vertical passant par le centre du dispositif.

2. Dispositif selon la revendication 1, caractérisé en ce que sont prévues des prismes triples (1,2) de même taille.

3. Dispositif selon l'une des revendications précédentes, caractérisé en ce que sont prévus des prismes triples (1, 2) répondant à une symétrie de rotation, pour lesquels la surface d'entrée de lumière (4, 5) est un triangle équilatéral.

4. Dispositif selon l'une des revendications précédentes, caractérisé en ce que six prismes triples (1, 2, 3, 131, 132, 133) sont assemblés pour former un réflecteur panoramique (140), pour lequel les prismes triples (1, 2, 3, 131, 132, 133) se suivant sont tournés les uns par rapport aux autres de 180° et adaptés les uns aux autres de manière que leurs pointes (6) de prisme partiel se situent en un point (155) commun.

5. Dispositif selon la revendication 4, caractérisé en ce qu'est prévu pour le réflecteur panoramique (140) une monture (121) équipée d'un adaptateur (120), et en ce qu'un dispositif de maintien (25) est susceptible d'être accouplé à l'adaptateur (120).
